# EUROPEAN PATENT APPLICATION

(11) **EP 4 715 350 A1**
(43) Date of publication of application: **25.03.2026**
(21) Application number: 23957480.9
(22) Date of filing: 08.12.2023
(51) Int. Cl.: G01J 5/02, G01J 5/04, G01J 5/48

(54) **THERMAL IMAGER CONNECTING APPARATUS**

(30) Priority: 30.10.2023 CN 202311416187
(71) Applicant: Raytron Technology Co., Ltd., Yantai, Shandong 264006 (CN)
(72) Inventor: ZHANG, Zhonggang, Yantai, Shandong 264006 (CN); JING, Sai, Yantai, Shandong 264006 (CN); LIU, Jigang, Yantai, Shandong 264006 (CN)
(74) Representative: Reiser & Partner Patentanwälte mbB
(86) International application number: PCT/CN2023/137676
(87) International publication number: WO 2025/091627

(57) **Abstract**

The embodiments of the application provide a thermal imager connecting device, including a clamping member and a protective housing used for mounting a thermal imager. The clamping member is rotatably connected to a front end of the protective housing. A lower Picatinny rail connecting portion is arranged at a lower end of the protective housing, and the lower Picatinny rail connecting portion is a Picatinny rail slot or a Picatinny rail; and/or, an upper Picatinny rail connecting portion is arranged at an upper end of the protective housing, and the upper Picatinny rail connecting portion is a Picatinny rail slot or a Picatinny rail; and/or, a side Picatinny rail connecting portion is arranged on a side of the protective housing, and the side Picatinny rail connecting portion is a Picatinny rail structure or a Picatinny rail slot structure. According to the thermal imager connecting device, a smart display device is clamped by the clamping member, the thermal imager is mounted and protected by the protective housing, and the protective housing is connected to an external device provided with a Picatinny rail slot or a Picatinny rail by means of a Picatinny rail or a Picatinny rail slot arranged on the protective housing, such that installation and matching the thermal imager, the smart display device and various external devices may be implemented, multi-scenario and multi-device application is realized, and the application scenarios and functions are greatly expanded.

## Description

### FIELD

The present invention relates to the technical field of accessories of thermal imagers, in particular to a thermal imager connecting device.

### BACKGROUND

Infrared thermography is a passive imaging method based on infrared radiation of a target. It is less affected by climates such as hazy and cloudy weather, and can work all day and night. A thermal imager is an imaging system that uses a mobile phone or the like as a detection tool, has the characteristics of small size, low weight and low power and may be easily integrated to various mobile terminals.

Due to the complex service environment of the thermal imager, electronic components in the thermal imager will be destroyed by vibrations and shocks, so the thermal imager needs to be placed in a protective housing to be fixed and protected to avoid unnecessary damage.

An existing protective housing for the thermal imager only has installation and positioning functions and cannot be fitted with accessories. When the thermal imager needs to be connected to other devices to realize more functions, the thermal imager cannot be fixed and connected to other accessories or external devices. For example, for outdoor adventure enthusiasts, there is a need to connect the thermal imager with a mobile phone, a laser device or other devices.

### SUMMARY

To solve the technical problems in the prior art, the present invention provides a thermal imager connecting device adapted for connecting and fixing a thermal imager and a device used together with the thermal imager to facilitate use.

To fulfill the above objective, the technical solution in the embodiments of the application is implemented as follows:

The present application provides a thermal imager connecting device comprising a clamping member configured for clamping a smart display device and a protective housing configured for mounting a thermal imager. The clamping member is rotatably connected to a front end of the protective housing;

A lower Picatinny rail connecting portion is arranged at a lower end of the protective housing, and the lower Picatinny rail connecting portion is a Picatinny rail slot or a Picatinny rail; and/or an upper Picatinny rail connecting portion is arranged at an upper end of the protective housing, and the upper Picatinny rail connecting portion is a Picatinny rail slot or a Picatinny rail; and/or a side Picatinny rail connecting portion is arranged on a side of the protective housing, and the side Picatinny rail connecting portion is a Picatinny rail structure or a Picatinny rail slot structure.

In an optional embodiment, a length of the upper Picatinny rail connecting portion, a length of the lower Picatinny rail connecting portion and a length of the side Picatinny rail connecting portion are set in a front-back direction.

In an optional embodiment, the protective housing comprises a protective housing body and an end cover, a cavity for mounting an accessory is formed in the protective housing body, and the end cover covers an open end of the cavity of the protective housing body.

In an optional embodiment, an adapter window is formed in a side of the protective housing body to allow an adapter connected to the accessory to enter into the cavity; and an adapter protection cover is arranged on the protective housing and configured to cover the adapter from an outer side.

In an optional embodiment, a lens hole is formed in a rear end of the protective housing such that a lens of the thermal imager can be received in the lens hole.

In an optional embodiment, the thermal imager connecting device further comprises a power supply handle. A Picatinny rail connecting portion is arranged at an upper end of the power supply handle, and the Picatinny rail connecting portion is a Picatinny rail or a Picatinny rail slot to be detachably connected to the lower Picatinny rail connecting portion.

In an optional embodiment, the power supply handle comprises a handle housing, a Picatinny rail connecting plate, a battery and a control circuit board, the Picatinny rail connecting portion is arranged at a top of the Picatinny rail connecting plate, the control circuit board is electrically connected to the battery, and the battery and the control circuit board are arranged in a chamber formed by the handle housing and the Picatinny rail connecting plate.

In an optional embodiment, a laser module is arranged in the power supply handle, and the laser module is electrically connected to the control circuit board.

In an optional embodiment, a first data cable is connected to the power supply handle, and the first data cable is a three-head data cable which comprises a head connected to an interface of the control circuit board, another head connected to the smart display device clamped by the clamping member, and further another head connected to the thermal imager received in the protective housing.

In an optional embodiment, a second data cable is connected to the power supply handle (50), and the second data cable is a double-head data cable which comprises a head connected to another interface of the control circuit board and another head connected to an external device.

In an optional embodiment, the handle housing comprises a cylindrical body and a bottom cover capable of being opened and closed with respect to the cylindrical body, and a bottom of the bottom cover is provided with a threaded connecting hole and/or a hang hole.

In an optional embodiment, a tower spring is mounted at a position, corresponding to the battery, of the bottom cover, and the tower spring elastically abuts against an end of the battery.

In an optional embodiment, the lower Picatinny rail connecting portion is a Picatinny rail slot detachably matched with an external device; and the external device is a gun, and a Picatinny rail on the gun is matched with the lower Picatinny rail connecting portion to thereby connect the thermal imager connecting device to the gun for use; or, the external device is a bow, and a Picatinny rail on the blow is matched with the lower Picatinny rail connecting portion to thereby connect the thermal imager connecting device to the bow for use.

In an optional embodiment, the lower Picatinny rail connecting portion comprises a first side rail, a second side rail and a second side clamping strip, and the second side clamping strip is detachably clamped on the second side rail such that a Picatinny rail slot is formed among the first side rail, the second side rail and the second side clamping strip.

The thermal imager connecting device provided by the application has at least the following beneficial effects: According to the thermal imager connecting device, a smart display device is clamped by the clamping member, the thermal imager is mounted and protected by the protective housing, and the protective housing is connected to an external device provided with a Picatinny rail slot or a Picatinny rail by means of a Picatinny rail or a Picatinny rail slot arranged on the protective housing, such that installation and matching the thermal imager, the smart display device and various external devices may be implemented, multi-scenario and multi-device application is realized, and the application scenarios and functions are greatly expanded.

### BRIEF DESCRIPTION OF THE DRAWINGS

FIG. 1 is a schematic stereogram of a thermal imager connecting device according to a first embodiment of the application.
FIG. 2 is an exploded view of the thermal imager connecting device in FIG. 1.
FIG. 3 is an exploded view of a clamping member of the thermal imager connecting device in FIG. 2.
FIG. 4 is an exploded view of a protective housing, provided with a Picatinny rail, of the thermal imager connecting device in FIG. 2.
FIG. 5 is an exploded view of the protective housing, provided with the Picatinny rail, of the thermal imager connecting device in FIG. 2, from another perspective.
FIG. 6 is an exploded view of the protective housing, provided with the Picatinny rail, of the thermal imager connecting device in FIG. 2, from yet another perspective.
FIG. 7 is a schematic stereogram of a thermal imager connecting device according to a second embodiment of the application.
FIG. 8 is an exploded view of the thermal imager connecting device in FIG. 7.
FIG. 9 is a schematic stereogram of a power supply handle of the thermal imager connecting device in FIG. 7.
FIG. 10 is an exploded view of the power supply handle in FIG. 9.
FIG. 11 is a schematic stereogram of the power supply handle of the thermal imager connecting device in FIG. 7, from another perspective.
FIG. 12 is an exploded view of the power supply handle in FIG. 11.
FIG. 13 is a schematic stereogram of a thermal imager connecting device according to a third embodiment of the application.
FIG. 14 is an exploded view of the thermal imager connecting device in FIG. 13.
FIG. 15 is a further exploded view of the thermal imager connecting device in FIG. 14.

### Reference signs:

100, thermal imager connecting device;
10, clamping member (11, upper clamping body; 12, lower clamping body; 13, spring; 14, locking screw; 15, first hinge lug; 111, upper clamping plate; 112, guide pillar; 121, lower clamping plate; 122, back plate; 1221, guide hole; 1222, threaded hole);
20, connecting pin;
30, protective housing (31, protective housing body; 32, end cover; 33, end cover locking screw; 34, adapter protection cover; 35, adapter; 36, stop plate; 311, second hinge lug; 312, upper Picatinny rail connecting portion; 313, lower Picatinny rail connecting portion; 314, adapter window; 315, side Picatinny rail connecting portion; 3131, first side rail; 3132, second side rail; 3133, second side clamping strip; 321, lens hole; 322, locking screw hole; 341, adapter socket);
40, Picatinny rail fixing pin;
50, power supply handle (51, handle housing; 52, Picatinny rail connecting plate; 53, battery; 54, control circuit board; 55, tower spring; 56, first data cable; 57, second data cable; 58, laser module; 511, cylindrical body; 512, bottom cover; 513, first switch button; 514, second switch button; 5121, threaded connecting hole; 5122, hang hole; 521, cover plate; 522, Picatinny rail connecting portion);
70, thermal imager;
90, laser device (91, laser device body; 92, retaining ring; 93, side strip).

### DESCRIPTION OF THE EMBODIMENTS

The technical solution of the application is expounded in further detail below in conjunction with accompanying drawings and specific embodiments.

Unless otherwise defined, all technical and scientific terms used here have the same meaning as commonly understood by those skilled in the technical field of the application. The terms used in the description of the application are merely for the purpose of describing specific embodiments and are not intended to limit the implementation of the application. The term "and/or" used here indicates the inclusion of any one or all possible combinations of one or more related items listed.

In the description of the application, it should be understood that terms such as "center", "upper", "lower", "front", "back", "left", "right", "vertical", "horizontal", "top", "bottom", "inner" and "outer" are used to indicate directional or positional relationships based on the accompanying drawings merely for the purpose of facilitating and simplifying the description of the application, do not indicate that devices or elements referred to must be in a specific direction or be configured and operated in a specific direction, and thus should not be construed as limitations of the application. In the description of the application, unless otherwise stated, "multiple" refer to two or more.

In the description of the application, it should be noted that unless otherwise expressly stated and defined, terms "mount", "link" and "connect" should be understood in a broad sense. For example, "connect" may refer to fixed connection, detachable connection or integrated connection; direct connection, indirect connection by means of an intermediate medium, or internal communication of two elements. Those ordinarily skilled in the art may appreciate the specific meanings of these terms in the application according to specific circumstances.

A Picatinny rail, also known as a fishbone, an MIL-STD-1913 rail or an STANAG 2324 rail, abbreviated as pí guǐ in Chinese, is a standard accessory mounting platform, which is typically applied to devices such as light weapons and sights. According to a thermal imager connecting device provided by the invention, a protective housing provided with a Picatinny rail or a Picatinny rail slot matched with the Picatinny rail is provided to mount and protect a thermal imager and may be connected to a smart display device and other external devices provided with a Picatinny rail or a Picatinny rail slot to perfect installation and matching of accessories and various external devices, such that multi-scenario and multi-device application is realized, and the application scenarios and functions are greatly expanded.

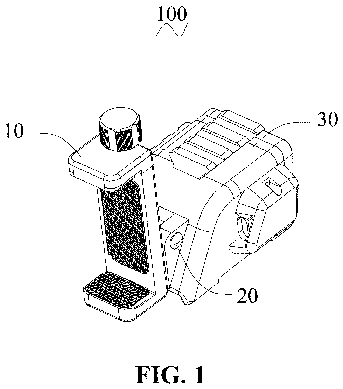

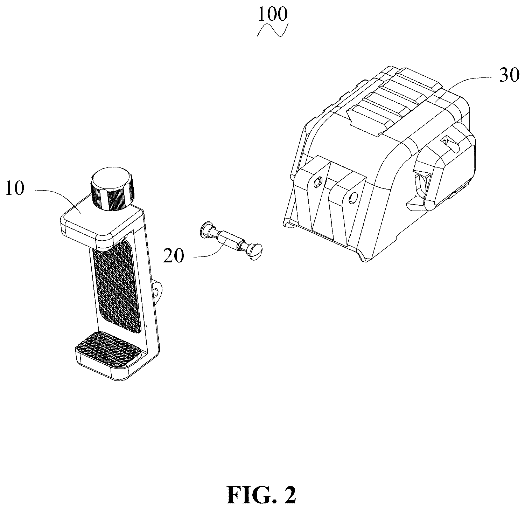

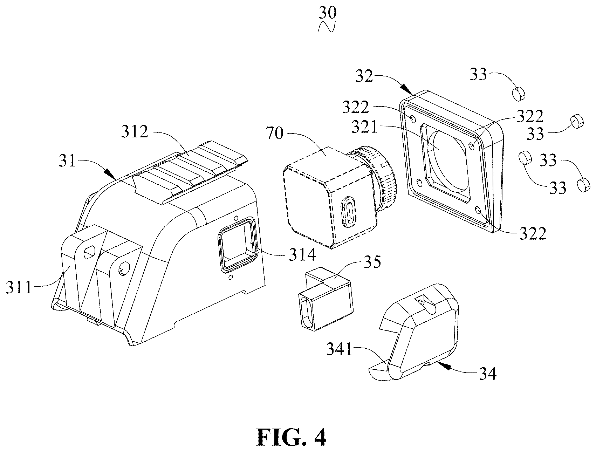

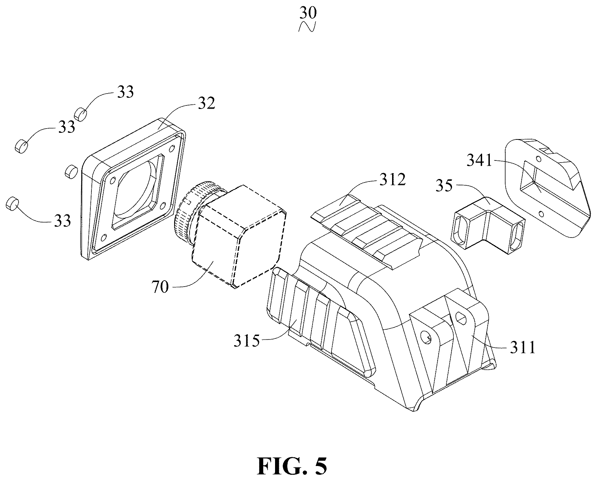

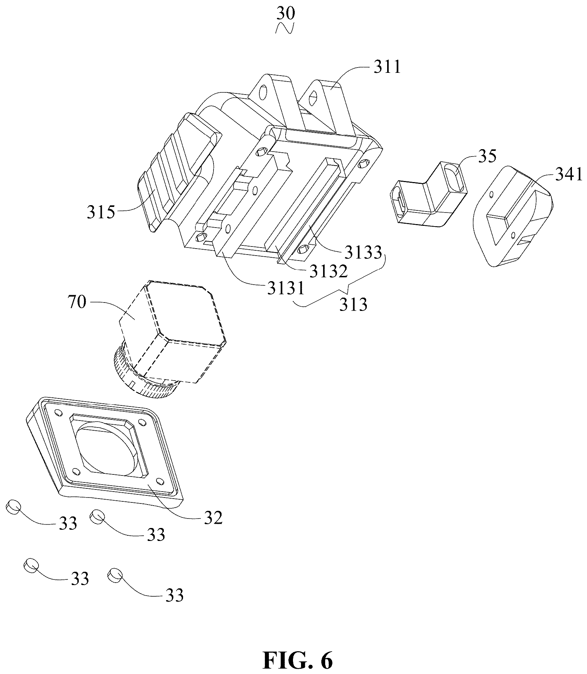

Referring to FIGS. 1 and 2, a thermal imager connecting device 100 according to a first embodiment of the present application includes a clamping member 10 and a protective housing 30. The protective housing 30 is movably connected to the clamping member 10 by means of a connecting pin 20 (for example, the protective housing 30 is hinged to the clamping member 10 as shown in the figures), such that the angle of a display, clamped on the clamping member 10, may be adjusted with respect to the protective housing 30 by means of the clamping member 10 to allow users to watch the display at a suitable angle. The protective housing 30 is configured to mount an external device such as a thermal imager 70 (shown in FIGS. 4 to 6) therein, such that the thermal imager and the external device used together with the thermal imager are assembled and connected into a whole by means of the thermal imager connecting device 100.

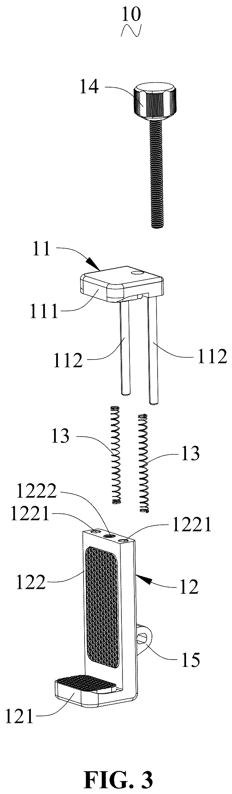

Referring to FIG. 3, the clamping member 10 is used for clamping a mobile phone, a display screen or other smart display devices provided with a display screen. The clamping member 10 includes an upper clamping body 11, a lower clamping body 12, springs 13, a locking screw 14 and a first hinge lug 15. The upper clamping body 11 and the lower clamping body 12 are arranged opposite to each other in the vertical direction, and the upper clamping body 11 is movable with respect to the lower clamping body 12 in the vertical direction. The springs 13 are compressibly arranged between the upper clamping body 11 and the lower clamping body 12 to drive the upper clamping body 11 to move upward with respect to the lower clamping body 12, such that a mobile phone, a display screen or other smart display devices provided with a display screen may be placed between the upper clamping body 11 and the lower clamping body 12. The locking screw 14 extends through the upper clamping body 11 to engage with the lower clamping body 12 to thereby lock the upper clamping body 11 and the lower clamping body 12, such that the smart display device is clamped. The first hinge lug 15 is arranged on a back side of the clamping member 10 to provide a position for hinge with the protective housing 30.

The upper clamping body 11 may be formed integrally and includes an upper clamping plate 111 and guide pillars 112 extending downwards from the upper clamping plate 111. A lower surface of the upper clamping plate 111 is configured to abut against an upper end surface of the smart display device, and the guide pillars 112 are configured to guide the upper clamping body 11 to move with respect to the lower clamping body 12.

The lower clamping body 12 may be formed integrally and includes a lower clamping plate 121 and a back plate 122 connected to the lower clamping plate 121. The lower clamping plate 121 is arranged opposite to the upper clamping plate 111 and configured to abut against a lower end surface of the smart display device, and the back plate 122 is configured to abut against a back side of the smart display device. The upper clamping plate 111, the lower clamping plate 121 and the back plate 122 abut against the smart display device in three directions to clamp the smart display device. Soft gaskets may be arranged on surfaces, facing the smart display device, of the upper clamping plate 111, the lower clamping plate 121 and the back plate 122, such that damage to the smart display device caused by rigid contact with the smart display device is avoided while the friction applied to the smart display device is increased.

Guide holes 1221 and a threaded hole 1222 are formed downwards in an upper surface of the back plate 122. The guide holes 1221 correspond to and are matched with the guide pillars 112 respectively, and the guide pillars 112 are moveable in the guide holes 1221 to guide the upper clamping body 11 to move and adjust a distance between the upper clamping plate 111 of the upper clamping body 11 and the lower clamping plate 121 of the lower clamping body 12 to adapt to smart display devices with different heights. The springs 13 are respectively arranged in the guide holes 1221 to apply an upward elastic force to the corresponding guide pillars 112. The locking screw 14 extends through the upper clamping plate 111 and is threadedly engaged in the threaded hole 1222. The locking screw 14 is rotatable to lock the upper clamping plate 111 with respect to the lower clamping plate 121.

Referring to FIGS. 4, 5 and 6, the protective housing 30 is configured to mount and fix the thermal imager 70 therein. The protective housing 30 includes a protective housing body 31, an end cover 32 and end cover locking screws 33. A cavity for mounting the thermal imager 70 is formed in the protective housing body 31. The end cover 32 covers an open end of the cavity of the protective housing body 31 and is locked to the protective housing body 31 by means of the end cover locking screws 33. When the thermal imager 70 in the protective housing 30 needs to be detached or the thermal imager 70 needs to be mounted in the protective housing 30, the end cover locking screws 33 are detached from the end cover 32 to allow the end cover 32 to be removed from the open end of the protective housing body 31, and then the thermal imager 70 may be taken out from or placed into the open end of the protective housing body 31.

Second hinge lugs 311 are arranged at a front end of the protective housing body 31, and the second hinge lugs 311 and the first hinge lug 15 are aligned and then connected by means of the connecting pin 20. The connecting pin 20 functions as a rotating shaft extending in the horizontal direction to allow the clamping member 10 to rotate with respect to the protective housing 30 around the rotating shaft extending in the horizontal direction, to adjust the angle of a screen of the smart display device clamped on the clamping member 10. In the embodiment shown in the figures, the front end of the protective housing body 31 forms a slope that inclines upwards, such that the angle of the clamping member 10 may be adjusted within a wide range.

An upper Picatinny rail connecting portion 312 and a lower Picatinny rail connecting portion 313 are respectively arranged at an upper end and a lower end of the protective housing body 31, and an adapter window 314 and a side Picatinny rail connecting portion 315 are respectively arranged on a right side and a left side of the protective housing body 31. For example, in a case where the upper Picatinny rail connecting portion 312 and the side Picatinny rail connecting portion 315 are both configured as Picatinny rail structures and the lower Picatinny rail connecting portion 313 is configured as a Picatinny rail slot structure, the upper Picatinny rail connecting portion 312 may be connected to an external device provided with a Picatinny rail slot in the lower end, the lower Picatinny rail connecting portion 313 may be connected to an external device provided with a Picatinny rail at the upper end, and the side Picatinny rail connecting portion 315 may be connected to an external device provided with a Picatinny rail slot in one side. A connector of an adapter 35 can be inserted into the adapter window 314 to be plugged and fitted into an interface of the thermal imager 70 received in the cavity of the protective housing body 31. The length of the upper Picatinny rail connecting portion 312, the length of the lower Picatinny rail connecting portion 313 and the length of the side Picatinny rail connecting portion 315 are set in the front-back direction.

A lens hole 321 and locking screw holes 322 are formed in the end cover 32. The lens hole 321 corresponds to a lens of the thermal imager 70, and the lens on the thermal imager 70 may be received in the lens hole 321. The locking screw holes 322 are formed in corners of the end cover 32 such that the end cover locking screws 33 can extend through the locking screw holes 322 respectively to engage with the protective housing body 31.

To protect the adapter 35, an adapter protection cover 34 is arranged on an outer side of the adapter window 314 of the protective housing 30, and the adapter protection cover 34 covers the adapter 35 from the outer side. An adapter socket 341 is formed in the adapter protection cover 34, and the shape of the adapter socket 341 matches the shape of a portion, protruding out of the protective housing body 31, of the adapter 35, such that the adapter 35 is protected.

The lower Picatinny rail connecting portion 313 includes a first side rail 3131, a second side rail 3132 and a second side clamping strip 3133. The first side rail 3131 and the second side rail 3132 are formed on a lower surface of the protective housing body 31. The second side clamping strip 3133 is detachably locked with the second side rail 3132, such that a Picatinny rail slot matched with a Picatinny rail is formed among the first side rail 3131, the second side rail 3132 and the second side clamping strip 3133.

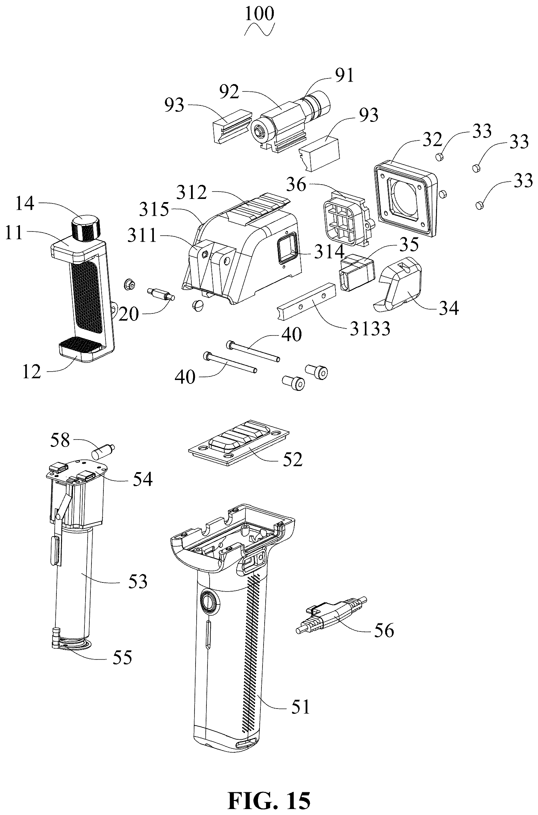

A stop plate 36 (see FIG. 15) may be arranged in the protective housing body 31 and is configured to abut against the thermal imager 70. The thermal imager 70 is fixed in two opposite directions by the stop plate 36 and the end cover 32, respectively.

The protective housing 30 may be mounted on an external device such as a handle, a gun or a bow by cooperation between a Picatinny rail and a Picatinny rail slot.

In the thermal imager connecting device 100 described above, the upper end and at least one side of the protective housing 30 are provided with the upper Picatinny rail connecting portion 312 and/or the side Picatinny rail connecting portion 315, and the upper Picatinny rail connecting portion 312 and the side Picatinny rail connecting portion 315 are Picatinny rails, such that an external device provided with a Picatinny rail slot structure (such as a laser device, a flashlight or a laser range finder) may be quickly and firmly connected to the protective housing 30 by means of the upper Picatinny rail connecting portion 312 and the side Picatinny rail connecting portion 315. The protective housing 30 may be mounted to an external device provided with a Picatinny rail structure (such as a handle, a gun or a bow) by means of the lower Picatinny rail connecting portion 313. Alternatively, the upper Picatinny rail connecting portion 312 and/or the side Picatinny rail connecting portion 315 on the protective housing 31 may be Picatinny rail slots, and a Picatinny rail may be correspondingly arranged on an external device such as a laser device to be matched with the Picatinny rail slots. Similarly, the lower Picatinny rail connecting portion 313 may be a Picatinny rail, and a Picatinny rail slot is correspondingly formed in an external device such as a handle to be matched with the Picatinny rail.

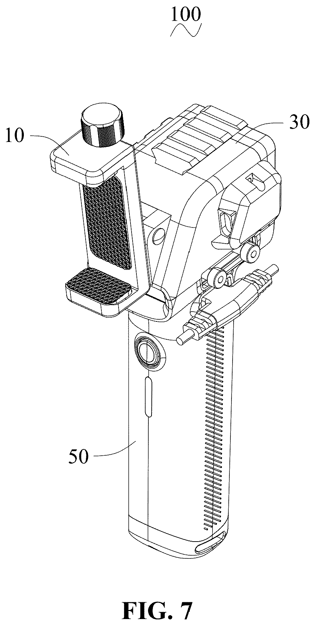

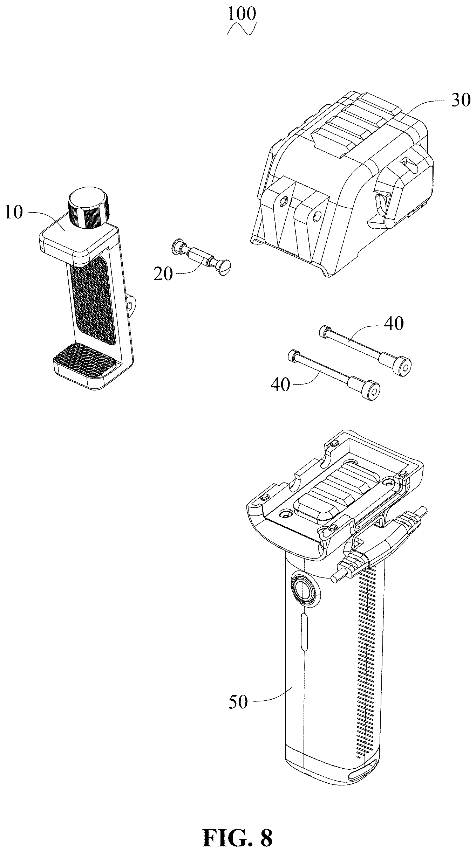

Referring to FIGS. 7 and 8, a thermal imager connecting device 100 according to a second embodiment of the application includes a clamping member 10, a protective housing 30 and a power supply handle 50. The protective housing 30 is hinged to the clamping member 10 by means of a connecting pin 20, such that the clamping member 10 is rotatable with respect to the protective housing 30 to adjust the angle of a smart display device clamped by the clamping member 10 to allow users to watch a screen of the smart display device at a suitable angle. The power supply handle 50 and the protective housing 30 are detachably connected to each other by means of a Picatinny rail and a Picatinny rail slot and are fixed together by means of Picatinny rail fixing fins 40. The power supply handle 50 functions as a grip portion of the clamping member 10 and the protective housing 30 and is able to supply power to the smart display device clamped on the clamping member 10, a thermal imager 70 received in the protective housing 30 and other external devices connected to the protective housing 30.

The structure of the clamping member 10 and the structure of the protective housing 30 have been described in detail in the first embodiment and will not be repeated here.

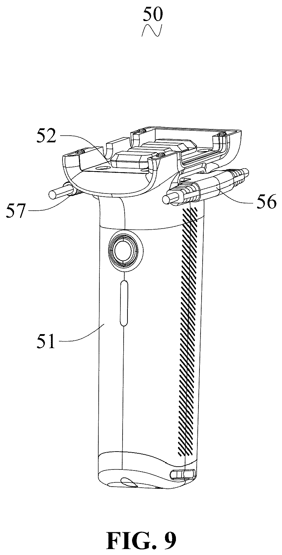

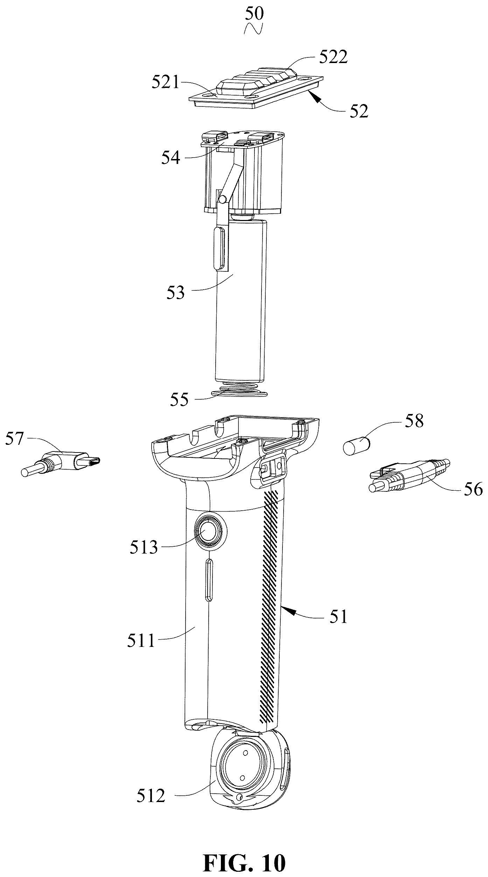

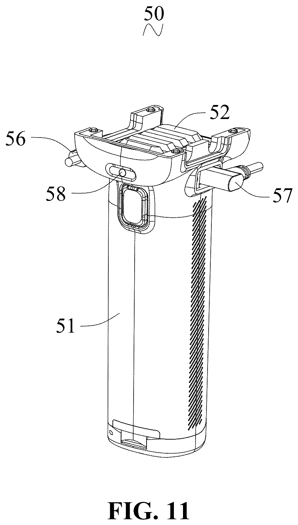

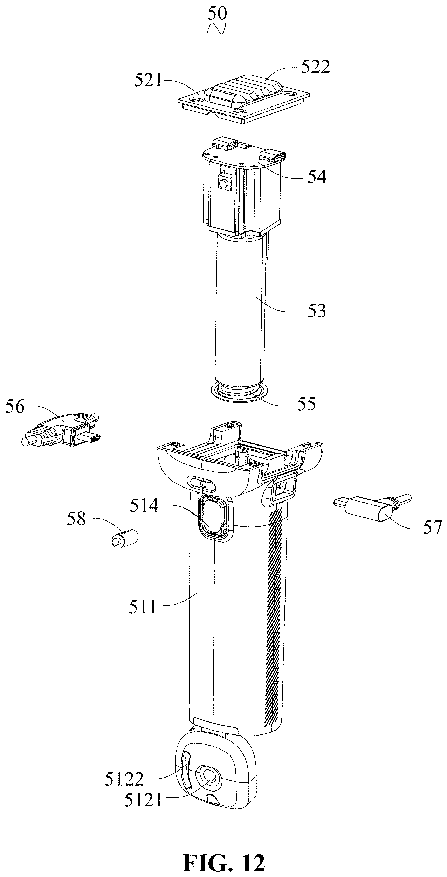

Referring to FIGS. 9, 10, 11 and 12, the power supply handle 50 is detachably connected to the bottom of the protective housing 30 and includes a handle housing 51, a Picatinny rail connecting plate 52, a battery 53 and a control circuit board 54. The battery 53 and the control circuit board 54 are arranged in a chamber formed by the handle housing 51 and the Picatinny rail connecting plate 52.

The handle housing 51 is configured as a cylindrical structure easy to hold. The Picatinny rail connecting plate 52 is arranged at an upper end of the handle housing 51, and the Picatinny rail connecting plate 52 may be connected to the protective housing 30 by cooperation between a Picatinny rail and a Picatinny rail slot.

The handle housing 51 comprises a cylindrical body 511 and a bottom cover 512 capable of rotating with respect to the cylindrical body 511 to be opened and closed. The battery 53 may be placed in or replaced by opening the bottom cover 512. A threaded connecting hole 5121 and a hang hole 5122 are formed in the bottom of the bottom cover 512. The threaded connecting hole 5121 may be a 1/4-inch threaded hole and may be connected to a tripod or other devices provided with a standard 1/4-inch bolt. After a string penetrates through the hang hole 5122, the power supply handle 50 may be easily hanged on the wrist or the neck of a user by means of the string.

The Picatinny rail connecting plate 52 is covered on the upper end of the handle housing 51 and is connected to the lower Picatinny rail connecting portion 313 of the protective housing 30. The Picatinny rail connecting plate 52 includes a cover plate 521 and a Picatinny rail connecting portion 522 arranged on an upper surface of the cover plate 521. The length of the Picatinny rail connecting portion 522 is set in the front-back direction. The cover plate 521 is covered on and fastened to the upper end of the handle housing 51. The Picatinny rail connecting portion 522 cooperates with the lower Picatinny rail connecting portion 313 to mount the power supply handle 50 below the protective housing 30. The Picatinny rail connecting portion 522, as a connecting piece for the protective housing 30, tightly connects the protective housing 30 and the power supply handle 50 in the vertical direction by means of cooperating with the second side clamping strip 3133 and the Picatinny rail fixing pins 40.

To improve the stability and reliability of electrical connection of the battery 53, a tower spring 55 is mounted at a position, corresponding to the battery 53, of the bottom of the bottom cover 512, and the tower spring 55 elastically abuts against one end of the battery 53. The tower spring 55 is elastic and electrically conductive, thus being able to secure the battery 53 and conduct electric energy out. The battery 53 may be a rechargeable lithium battery and is electrically connected to the control circuit board 54 to realize charge and discharge.

The control circuit board 54 is electrically connected to the battery 53 to obtain electric energy from the battery 53 and realize circuit control.

A first data cable 56 and a second data cable 57 are connected to the power supply handle 50. The first data cable 56 and the second data cable 57 are respectively connected to two opposite sides of the handle housing 51 and correspond to corresponding interfaces on the control circuit board 54.

In the embodiment shown in the figure, the first data cable 56 is a three-head data cable. One head of the first data cable 56 is connected to the control circuit board 54, for example, by means of a type-C interface to obtain electric energy from the battery 53; and the electric energy is transmitted to the smart display device clamped by the clamping member 10 by means of another head of the first data cable 56 and is transmitted to the thermal imager 70 received in the protective housing 30 by means of the other head of the first data cable 56. The first data cable 56 also realizes data connection between the smart display device and the thermal imager 70.

In the embodiment shown in the figures, the second data cable 57 is a double-head data cable. One head of the second data cable 57 is connected to the control circuit board 54, for example, by means of a type-C interface to obtain electric energy from the battery 53; and the other head of the second data cable 57 is connected to an external device provided with a type-C interface such as a flashlight and a laser range finder, or is connected to a power supply to charge the battery 53.

A first switch button 513 and a second switch button 514 are also arranged on the handle housing 51. The first switch button 513 and the second switch button 514 may be arranged on two opposite sides and correspond to press portions of the control circuit board 54 to realize different control operations, respectively. For example, the first switch button 513 may be short pressed once to start or stop power supply of the second data cable 57; and the second switch button 514 may be short pressed once to turn on or off a laser module 58, may be long pressed to start power supply of the first data cable 56, and may be long pressed again to stop power supply of the first data cable 56.

The laser module 58 may be arranged in the power supply handle 50 and electrically connected to the control circuit board 54. The laser module 58, after being power on, may emit laser backwards to indicate a target position. The laser module 58 obtains electric energy from the battery 53 by mans of the control circuit board 54 and is controlled to be turned on and off by means of the second switch button 514.

In a case where the thermal imager connecting device 100 is used together with the power supply handle 50, the lower Picatinny rail connecting portion 313 of the protective housing 30 may be a Picatinny rail, and the Picatinny rail connecting portion on the Picatinny connecting plate 52 of the power supply handle 50 is correspondingly a Picatinny rail slot. In a case where the thermal imager connecting device 100 is used together with a gun or a bow, the lower Picatinny rail connecting portion 313 of the protective housing 30 may be a Picatinny rail slot since a Picatinny rail is generally arranged on the gun or the bow to be matched with the lower Picatinny rail connecting portion 313. In a case where no Picatinny rail is arranged on the bow, a connecting piece provided with a Picatinny rail may be mounted on the bow and then matched with the lower Picatinny rail connecting portion 313.

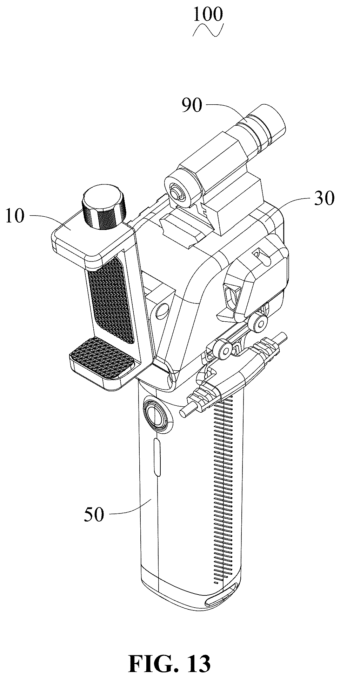

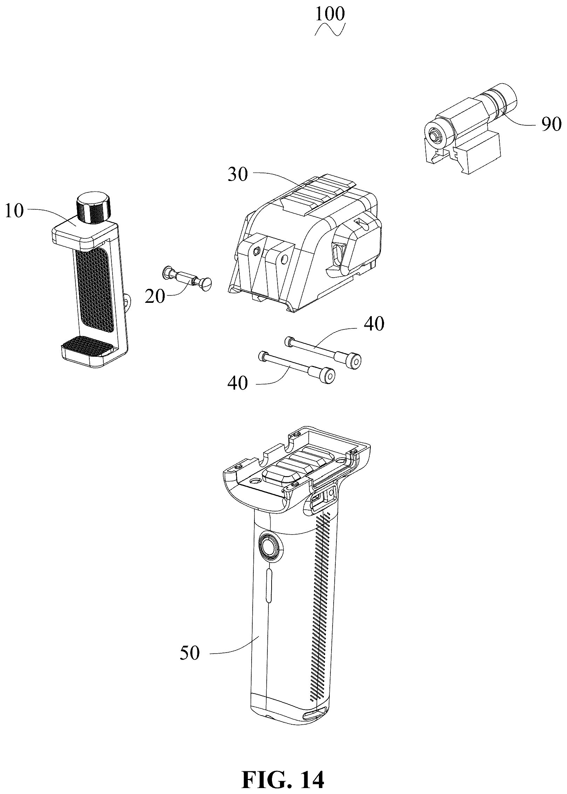

Referring to FIGS. 13 and 14, a thermal imager connecting device 100 according to a third embodiment of the application includes a clamping member 10, a protective housing 30, a power supply handle 50 and a laser device 90. The protective housing 30 is hinged to the clamping member 10 by means of a connecting pin 20, such that the clamping member 10 is rotatable with respect to the protective housing 30 to adjust the angle of a smart display device clamped on the clamping member 10 to allow users to watch a screen of the smart display device at a suitable angle. The power supply handle 50 is detachably connected to the protective housing 30 by means of a Picatinny rail and a Picatinny rail slot and is fixed to the protective housing 30 by means of Picatinny rail fixing pins 40. The power supply handle 50 functions as a grip portion of the clamping member 10 and the protective housing 30 and is able to supply power to the smart display device clamped by the clamping member 10, a thermal imager 70 received in the protective housing 30 and other external devices connected to the protective housing 30. The laser device 90 is a device capable of emitting laser to indicate a target position or measure the distance to a target and is detachably connected to the protective housing 30 by means of a Picatinny rail and a Picatinny rail slot.

The structure of clamping member 10, the structure of the protective housing 30 and the structure of the power supply handle 50 have been described in detail in the first embodiment and the second embodiment and will not be repeated here.

Referring to FIG. 15, in the embodiment shown in the figures, the laser device 90 is provided with a Picatinny rail slot matched with the upper Picatinny rail connecting portion 312 of the protective housing 30. The laser device 90 includes a laser device body 91, a retaining ring 92 and side strips 93. The retaining ring 92 is disposed around the laser device body 91, and two side strips 93 are matched with tooth-shaped strips formed below the retaining ring 92 from two sides to form a Picatinny rail slot. The laser device 90 is slidably mounted on the upper Picatinny rail connecting portion 312 on the protective housing 30 by means of the Picatinny rail slot to thereby fix the laser device 90 above the protective housing 30.

According to the thermal imager connection device provided by the present application, the application scenarios of the thermal imager are fully taken into account, a smart display device is clamped by the clamping member, the thermal imager is mounted in and protected by the protective housing, and the protective housing is connected to the external device provided with a Picatinny rail slot or a Picatinny rail by means of a Picatinny rail or a Picatinny rail slot arranged on the protective housing. In addition, an adapter protection cover is arranged on the protective housing to effectively protect an adapter connected to the thermal imager received in the protective housing, such that the anti-drop performance is improved. According to the thermal imager connecting device provided by the application, external devices provided with Picatinny rail slots, such as a laser device, a flashlight or a laser range finder, can be mounted on the protective housing by means of Picatinny rails located at the upper end and one side of the protective housing, such that the mounting capacity is improved.

According to the thermal imager connecting device provided by the application, the protective housing is provided with the lower Picatinny rail connecting portion and may be quickly detached and separated from the power supply handle below by cooperation between a Picatinny rail and a Picatinny rail slot, and the power supply handle is able to supply power to the thermal imager, the smart display device and other external devices at the same time to prolong the operating time of the external devices. A universal rechargeable battery may be arranged in the power supply handle, and the rechargeable battery may be changed quickly and is more universal. The battery may discharge to the outside and may be charged, such that the operability is improved. The power supply handle is provided with a laser device, which may be turned on or off by a switch to efficiently indicate a measured object. A 1/4-in threaded hole and a hang hole are formed in the bottom of the power supply handle, such that the power supply handle may better adapt to other devices, improving the ease of use.

To sum up, the thermal imager connecting device provided by the application may implement installation and matching of a thermal imager, a smart display device and various external devices, thereby realizing multi-scenario and multi-device application and greatly expanding the application scenarios and functions.

It should be noted that the term "comprise" or "include" or any other variants thereof are intended to indicate non-exclusive inclusion, such that a process, method, article or device comprising a series of elements not only comprises elements that are listed, but also comprises other elements that are not clearly listed, or inherent elements of the process, method, article or device. Unless otherwise specifically stated, an element defined by "comprise a" shall not exclude other identical elements in the process, method, article or device comprising the element.

The above embodiments are merely specific ones of the application, and the protection scope of the application is not limited to the above embodiments. Modifications or substitutions easily obtained by any skilled in the art in the technical scope of the application should fall within the protection scope of the application. Therefore, the protection scope of the application should be defined by the claims.

## Claims

1. A thermal imager connecting device, **characterized by** comprising a clamping member (10) configured for clamping a smart display device and a protective housing (30) configured for mounting a thermal imager (70), wherein the clamping member (10) is rotatably connected to a front end of the protective housing (30);
wherein a lower Picatinny rail connecting portion (313) is arranged at a lower end of the protective housing (30), and the lower Picatinny rail connecting portion (313) is a Picatinny rail slot or a Picatinny rail; and/or
an upper Picatinny rail connecting portion (312) is arranged at an upper end of the protective housing (30), and the upper Picatinny rail connecting portion (312) is a Picatinny rail slot or a Picatinny rail; and/or
a side Picatinny rail connecting portion (315) is arranged on a side of the protective housing (30), and the side Picatinny rail connecting portion (315) is a Picatinny rail structure or a Picatinny rail slot structure.

2. The thermal imager connecting device according to claim 1, **characterized in that** a length of the upper Picatinny rail connecting portion (312), a length of the lower Picatinny rail connecting portion (313) and a length of the side Picatinny rail connecting portion (315) are set in a front-back direction.

3. The thermal imager connecting device according to claim 2, **characterized in that** the protective housing (30) comprises a protective housing body (31) and an end cover (32), a cavity for mounting an accessory is formed in the protective housing body (31), and the end cover (32) covers an open end of the cavity of the protective housing body (31).

4. The thermal imager connecting device according to claim 3, **characterized in that** an adapter window (314) is formed in a side of the protective housing body (31) to allow an adapter (35) connected to the accessory to enter into the cavity; and an adapter protection cover (34) is arranged on the protective housing (30) and configured to cover the adapter (35) from an outer side.

5. The thermal imager connecting device according to claim 1, **characterized in that** a lens hole (321) is formed in a rear end of the protective housing (30) such that a lens of the thermal imager (70) can be received in the lens hole (321).

6. The thermal imager connecting device according to claim 1, **characterized by** further comprising a power supply handle (50), wherein a Picatinny rail connecting portion (522) is arranged at an upper end of the power supply handle (50), and the Picatinny rail connecting portion (522) is a Picatinny rail or a Picatinny rail slot to be detachably connected to the lower Picatinny rail connecting portion (313).

7. The thermal imager connecting device according to claim 6, **characterized in that** the power supply handle (50) comprises a handle housing (51), a Picatinny rail connecting plate (52), a battery (53) and a control circuit board (54), the Picatinny rail connecting portion (522) is arranged at a top of the Picatinny rail connecting plate (52), the control circuit board (54) is electrically connected to the battery (53), and the battery (53) and the control circuit board (54) are arranged in a chamber formed by the handle housing (51) and the Picatinny rail connecting plate (52).

8. The thermal imager connecting device according to claim 7, **characterized in that** a laser module (58) is arranged in the power supply handle (50), and the laser module (58) is electrically connected to the control circuit board (54).

9. The thermal imager connecting device according to claim 7, **characterized in that** a first data cable (56) is connected to the power supply handle (50), and the first data cable (56) is a three-head data cable which comprises a head connected to an interface of the control circuit board (54), another head connected to the smart display device clamped by the clamping member (10), and further another head connected to the thermal imager (70) received in the protective housing (30).

10. The thermal imager connecting device according to claim 9, **characterized in that** a second data cable (57) is connected to the power supply handle (50), and the second data cable (57) is a double-head data cable which comprises a head connected to another interface of the control circuit board (54) and another head connected to an external device.

11. The thermal imager connecting device according to claim 7, **characterized in that** the handle housing (51) comprises a cylindrical body (511) and a bottom cover (512) capable of being opened and closed with respect to the cylindrical body (511), and a bottom of the bottom cover (512) is provided with a threaded connecting hole (5121) and/or a hang hole (5122).

12. The thermal imager connecting device according to claim 11, **characterized in that** a tower spring (55) is mounted at a position, corresponding to the battery (53), of the bottom cover (512), and the tower spring (55) elastically abuts against an end of the battery (53).

13. The thermal imager connecting device according to claim 1, **characterized in that** the lower Picatinny rail connecting portion (313) is a Picatinny rail slot detachably matched with an external device; and
the external device is a gun, and a Picatinny rail on the gun is matched with the lower Picatinny rail connecting portion (313) to thereby connect the thermal imager connecting device to the gun for use; or, the external device is a bow, and a Picatinny rail on the blow is matched with the lower Picatinny rail connecting portion (313) to thereby connect the thermal imager connecting device to the bow for use.

14. The thermal imager connecting device according to claim 13, **characterized in that** the lower Picatinny rail connecting portion (313) comprises a first side rail (3131), a second side rail (3132) and a second side clamping strip (3133), and the second side clamping strip (3133) is detachably clamped on the second side rail (3132) such that a Picatinny rail slot is formed among the first side rail (3131), the second side rail (3132) and the second side clamping strip (3133).
